# EUROPEAN PATENT APPLICATION

(11) **EP 2 067 804 A1**
(43) Date of publication of application: **10.06.2009**
(21) Application number: 07828460.1
(22) Date of filing: 26.09.2007
(51) Int. Cl.: C08G 18/48, C08G 65/04, C08G 101/00

(54) **METHOD FOR PRODUCING SOFT POLYURETHANE FOAM**

(30) Priority: 27.09.2006 JP 2006263134
(71) Applicant: Asahi Glass Company, Limited, Chiyoda-ku Tokyo 100-8405 (JP)
(72) Inventor: SASAKI, Takayuki, Kamisu-city Ibaraki 3140195 (JP); KUMAGAI, Naohiro, Kamisu-city Ibaraki 3140195 (JP); SASAO, Yasuyuki, Kamisu-city Ibaraki 3140195 (JP); IKAI, Shigeru, Kamisu-city Ibaraki 3140195 (JP); SUZUKI, Chitoshi, Kamisu-city Ibaraki 3140195 (JP)
(74) Representative: Hartz, Nikolai
(86) International application number: PCT/JP2007/068714
(87) International publication number: WO 2008/038678

(57) **Abstract**

To provide a process for producing a flexible polyurethane foam, which can suitably form a flexible polyurethane foam having a good cushioning characteristic by using a raw material derived from a natural fat/oil.

The process comprises a step of reacting a polyoxyalkylene polyol (A) containing the first polyoxyalkylene polyol (A1) obtained by ring-opening polymerization of an alkylene oxide (c) with an initiator (b) in the presence of a polymerization catalyst (a), with a polyisocyanate compound (B) in the presence of a catalyst (C) and a blowing agent (D). The polymerization catalyst (a) is at least one member selected from the group consisting of a coordination anionic polymerization catalyst and a cationic polymerization catalyst, and the initiator (b) is a polyol derived from a natural fat/oil, which is obtained by providing a natural fat/oil with hydroxyl groups through a chemical reaction, and has a hydroxyl value of from 20 to 250 mgKOH/g and a ratio of the mass average molecular weight to the number average molecular weight calculated as polystyrene, (Mw/Mn), of at least 1.2.

## Description

### TECHNICAL FIELD

The present invention relates to a process for producing a flexible polyurethane foam by using a raw material derived from a natural fat/oil.

### BACKGROUND ART

Usually, a polyether polyol to be used as a raw material for a flexible polyurethane foam is produced by ring-opening polymerization of an alkylene oxide such as ethylene oxide or propylene oxide.

Such a polyether polyol or a flexible polyurethane foam obtained by a reaction of the polyether polyol with an isocyanate compound, is a chemical product derived from petroleum, and accordingly, its final thermal disposal tends to increase carbon dioxide in air.

In recent years, in consideration of global warming, there has been a demand for a product which does not increase carbon dioxide in the natural world even if it is disposed.

For example, it is obvious that if a urethane product is produced by using, as a raw material, an animal and vegetable oil which is a compound obtained by fixing carbon dioxide in air, when such a product is thermally treated, carbon dioxide generated by burning carbon derived from the animal and vegetable oil, does not increase carbon dioxide in nature.

Among natural animal and vegetable oil, castor oil is only one which has hydroxyl groups, and the following Patent Document 1 discloses a method of producing a polyether by ring-opening polymerization of a monoepoxide with castor oil and/or a modified-castor oil as an initiator, in the presence of a double metal cyanide complex catalyst. However, castor oil is expensive, and it is difficult to make it into practical use.

Therefore, a method has been proposed to provide hydroxyl groups by a chemical reaction to a natural fat/oil having no hydroxyl groups.

For example, the following Patent Document 2 discloses a method of producing a urethane product by reacting an isocyanate compound with a hydroxyl group-containing polymer compound modified by hydroxyl groups provided by blowing of oxygen and/or air to double bonds in an natural fat/oil, or with its derivative.

Here, soybean oil modified by hydroxyl groups provided by blowing of oxygen and/or air (sometimes commonly referred to as aerated soybean oil) is used as it is for a reaction with an isocyanate compound, and there is no description about a method of using aerated soybean oil by adding an alkylene oxide thereto.

As a method of producing a polyol in which functional groups are increased, the following Patent Document 3 discloses a method of ring-opening polymerization of an alkylene oxide with a modified polyol obtained in such a manner that a natural fat/oil is provided with hydroxyl groups by blowing of oxygen and/or air thereto, and then it is ester-modified by using an amine or metallic catalyst such as potassium hydroxide. Further, although the document discloses a process for producing a flexible polyurethane foam, no physical property values showing the characteristics of the foam are disclosed at all.

In the following Patent Document 4, a method of purifying vegetable oil is disclosed. It discloses a method of purification wherein after an unpurified oil is separated into an oil phase and a gum phase, air is blown into the oil phase, and the obtained purified oil is said to be suitable for a urethane foam. However, a process for producing such a foam is not specifically disclosed.

The following Patent Document 5 discloses a process for producing a flexible polyurethane foam, a semi rigid polyurethane foam or a rigid polyurethane foam. However, a flexible polyurethane foam exemplified in Examples is a polyurethane foam produced by using no petroleum type polyol but only vegetable oil as a polyol. Further, the obtained flexible polyurethane foam has an extremely high density which is from 192 to 720 kg/m³, and it is clearly stated that if the density is reduced to a level of from 48 to 64 kg/m³, the mechanical strength will be deteriorated. However, no specific evaluation relating to the mechanical strength is disclosed.

The following Patent Document 6 discloses a modified vegetable oil having hydroxyl groups provided by reacting vegetable oil with carbon monoxide and water in the presence of a metal catalyst. However, it does not disclose a method of using vegetable oil by adding an alkylene oxide thereto.

The following Patent Document 7 discloses a method of producing a flexible urethane foam by reacting a polyisocyanate with a polyol obtained by copolymerizing propylene oxide and ethylene oxide with an initiator by using potassium hydroxide which is an anionic polymerization catalyst, as a polymerization catalyst, wherein the initiator is a hydroxyl group-provided epoxidized soybean oil in which hydroxyl groups are provided by ring-opening an epoxidized soybean oil in the presence of an excess alcohol.
Patent Document 1: JP-A-5-163342
Patent Document 2: JP-A-2002-524627
Patent Document 3: US Patent Application Publication 2003/0191274
Patent Document 4: US Patent 6,476,244
Patent Document 5: US Patent 6,180,686
Patent Document 6: WO2005/033167
Patent Document 7: JP-A-2005-320431

### DISCLOSURE OF THE INVENTION

### PROBLEMS TO BE SOLVED BY THE INVENTION

Soybean oil (aerated soybean oil) modified by hydroxyl groups provided by blowing oxygen and/or air thereto, as described in Patent Documents 2, 3 and 4, or an epoxidized soybean oil as described in Patent Document 7 is much cheaper raw material than castor oil, and particularly, it is possible to produce aerated soybean oil at a low cost.

However, in a case where a flexible polyurethane foam is to be produced, when a part of a conventional raw material derived from petroleum is tried to be replaced with a raw material derived from a natural fat/oil, the foam cannot sometimes be suitably formed, or even if the foam is formed, the characteristics may sometimes be inferior.

For example, [0045] in Patent Document 7 discloses an example wherein a flexible polyurethane foam is produced by foaming in a mold, but the obtained foam had a rebound resilience which is an index for cushioning property, of approximately from 33 to 44%, and accordingly, depending on the application, a further improvement is required for the cushioning property.

The present invention is accomplished under the above circumstances, and it has an object to provide a process for producing a flexible polyurethane foam, which can form a flexible polyurethane foam having good cushioning property by using a raw material derived from a natural fat/oil.

### MEANS TO SOLVE THE PROBLEMS

The present invention provides the following.
(1) A process for producing a flexible polyurethane foam, which comprises a step of reacting a polyoxyalkylene polyol (A) containing a first polyoxyalkylene polyol (A1) obtained by ring-opening polymerization of an alkylene oxide (c) with an initiator (b) in the presence of a polymerization catalyst (a), with a polyisocyanate compound (B) in the presence of a catalyst (C) and a blowing agent (D), wherein the polymerization catalyst (a) is a catalyst which does not accelerate hydrolysis of a glyceride structure derived from a natural fat/oil; and the initiator (b) is a polyol derived from a natural fat/oil, which is obtained by providing a natural fat/oil with hydroxyl groups through a chemical reaction, and has a hydroxyl value of from 20 to 250 mgKOH/g and a ratio of the mass average molecular weight to the number average molecular weight calculated as polystyrene, (Mw/Mn), of at least 1.2.
(2) The process for producing a flexible polyurethane foam according to the above (1), wherein the polymerization catalyst (a) is at least one member selected from the group consisting of a coordination anionic polymerization catalyst and a cationic polymerization catalyst.
(3) The process for producing a flexible polyurethane foam according to the above (1) or (2), wherein the polyoxyalkylene polyol (A) further contains a second polyoxyalkylene polyol (A2) which is a polyoxyalkylene polyol other than the first polyoxyalkylene polyol (A1), and which has from 2 to 8 average number of the functional groups and a hydroxyl value of from 20 to 160 mgKOH/g.
(4) The process for producing a flexible polyurethane foam according to any one of the above (1) to (3), wherein in the polyoxyalkylene polyol (A), the mass ratio of the first polyoxyalkylene polyol (A1) to the second polyoxyalkylene polyol (A2), (A1)/(A2), is from 10/90 to 90/10.
(5) The process for producing a flexible polyurethane foam according to any one of the above (1) to (4), wherein the alkylene oxide (c) includes propylene oxide.
(6) The process for producing a flexible polyurethane foam according to any one of the above (1) to (5), wherein the initiator (b) is a polyol derived from a natural fat/oil, which is obtained by a method (1) wherein air or oxygen is blown in a natural fat/oil to form hydroxyl groups and/or a method (2) wherein after a natural fat/oil is epoxidized, the epoxy rings are ring-opened to form hydroxyl groups.
(7) A flexible polyurethane foam according to any one of the above (1) to (6), wherein the initiator (b) is derived from soybean oil.
(8) The process for producing a flexible polyurethane foam according to any one of the above (1) to (7), wherein the polyisocyanate compound (B) contains at least one member selected from the group consisting of tolylene diisocyanate, diphenylmethane diisocyanate, polymethylene polyphenyl polyisocyanate and their modified products.
(9) The process for producing a flexible polyurethane foam according to any one of the above (1) to (8), wherein the catalyst (C) contains at least one member selected from the group consisting of an amine compound, a reactive amine compound and an organic tin compound.
(10) The process for producing a flexible polyurethane foam according to any one of the above (1) to (9), wherein water is used as the blowing agent (D).

### EFFECT OF THE INVENTION

According to the present invention, by using a raw material derived from a natural far/oil, it is possible to form a flexible polyurethane foam having good cushioning property.

### BEST MODE FOR CARRYING OUT THE INVENTION

In the present invention, the number average molecular weight (Mn) and the mass average molecular weight (Mw) are molecular weights calculated as polystyrene. Specifically, they are values measured by the following method. With respect to some types of monodispersed polystyrene polymers having different polymerization degrees, which are commercially available as standard samples for molecular weight measurement, gel permeation chromatography (GPC) was measured by using a commercially-available GPC measuring device, and based on the relation of the molecular weight and the retention time of each polystyrene, a calibration curve was prepared. By using the calibration curve, the GPC spectrum of a sample compound to be measured, is analyzed by a computer, whereby the number average molecular weight and the mass average molecular weight of the sample compound are obtained. Such a measuring method is publicly known.

### POLYOXYALKYLENE POLYOL (A)

In the present invention, the polyoxyalkylene polyol (A) (hereinafter sometimes referred to as the polyol (A)) contains at least the following first polyoxyalkylene polyol (A1) (hereinafter sometimes referred to as the first polyol (A1)).

The polyol (A) preferably contains the first polyol (A1) and the following second polyoxyalkylene polyol (A2) (hereinafter sometimes referred to as the second polyol (A2)). Polyols included in the first polyol are not included in the second polyol.

### FIRST POLYOXYALKYLENE POLYOL (A1)

In the present invention, the first polyol (A1) is a polyoxyalkylene polyol produced by ring-opening polymerization of an alkylene oxide (c) with an initiator (b) made of the following polyol derived from a natural fat/oil, in the presence of the following specific polymerization catalyst (a).

The polyol derived from a natural fat/oil to be used as the initiator (b) is a polymer obtained by providing a natural fat/oil with hydroxyl groups through a chemical reaction. As the natural fat/oil, it is possible to use one which originally has no hydroxyl group, and it is possible to use a natural fat/oil other than castor oil and purified phytosterol. However, phytosterol is sterol derived from a plant, and it is slightly contained in vegetable oil such as soybean oil or canola oil. Inclusion in such range is acceptable.

Further, the natural fat/oil is preferably one containing an aliphatic acid glyceride having unsaturated double bonds. The natural fat/oil having unsaturated double bonds may, for example, be linseed oil, safflower oil, soybean oil, tung oil, poppy oil, canola oil, sesame oil, rice oil, camellia oil, olive oil, tall oil, palm oil, cotton oil, corn oil, fish oil, beef tallow or lard.

Further, hydroxyl groups are provided by using unsaturated bonds, and it is accordingly preferred that the iodine value is high, since the reactivity is thereby high, and it is possible to introduce more hydroxyl groups. Therefore, one having an iodine value of at least 50 is preferred, and specifically it may, for example, be linseed oil, safflower oil, soybean oil, tung oil, poppy oil, canola oil, sesame oil, rice oil, camellia oil, olive oil, tall oil, cotton oil, corn oil, fish oil or lard. Further, one having an iodine value of at least 100 is preferred, and specifically it may, for example, be linseed oil, safflower oil, soybean oil, tung oil, poppy oil, canola oil, sesame oil, rice oil, tall oil, cotton oil, corn oil or fish oil. Particularly, soybean oil is preferred since it is inexpensive.

The polyol derived from a natural fat/oil to be used as the initiator (b), has a hydroxyl value of from 20 to 250 mgKOH/g. Castor oil has a hydroxyl value of usually from 155 to 177 mgKOH/g, and since a natural fat/oil other than castor oil and phytosterol, does not have a hydroxyl group, the hydroxyl value is at most 10 mgKOH/g. The natural fat/oil which does not have a hydroxyl group, is provided with hydroxyl groups through a chemical reaction to have a hydroxyl value of from 20 to 250 mgKOH/g. If the hydroxyl value is less than 20 mgKOH/g, the crosslinking reactivity is poor, and the sufficient physical properties may not be obtained. On the other hand, even if all double bonds are converted to hydroxyl groups, the hydroxyl value cannot be increased more than the iodine value. The maximum value of the iodine value is 190 of linseed oil, but during the reaction, a hydrolysis may take place, and hydroxyl groups derived from glycerin which is an alcohol constituting the glyceride, may be formed. However, if this value becomes significantly large, such means that the glyceride bonds have been broken, whereby there is a concern that the molecular weight will decrease, a high polarity will be caused, and the compatibility or physical properties will be deteriorated. Further, if the hydroxyl value is too high, a crosslinking agent will be used in a large amount, whereby there will be deterioration in flexibility or less amount of a plant raw material to be used. Accordingly, the polyol derived from a natural fat/oil of the present invention has a hydroxyl value of at most 250 mgKOH/g, more preferably in a range of from 30 to 200 mgKOH/g.

The polyol derived from a natural fat/oil has a ratio (Mw/Mn) of the mass average molecular weight (Mw) to the number average molecular weight (Mn) of at least 1.2, which becomes an index for the molecular weight distribution. Castor oil and phytosterol have Mw/Mn of at most 1.1, but when a natural fat/oil other than the castor oil and phytosterol, is provided with hydroxyl groups through a chemical reaction, the Mw/Mn becomes at least 1.2. Making it smaller than that is difficult with current technologies. The upper limit of the Mw/Mn is not particularly limited, but it is preferably at most 20, more preferably at most 15 from the viewpoint of securing flowability.

In the present invention, the mass average molecular weight (Mw) of the polyol derived from a natural fat/oil is preferably at least 1,500, more preferably at least 1,700, further preferably at least 2,000, from the viewpoint of the compatibility or dynamic physical properties. The upper limit of Mw of the polyol derived from a natural fat/oil is not particularly limited, but it is preferably at most 500,000, more preferably at most 100,000, so that the viscosity is low, and the flowability is good.

As a method for producing the polyol derived from a natural fat/oil by providing the natural fat/oil with hydroxyl groups through a chemical reaction, it is possible to suitably use a known method. Specific examples may be a method (1) wherein air or oxygen is blown in a natural fat/oil to form hydroxyl groups (hereinafter also referred to as a blowing method), a method (2) wherein after a natural fat/oil is epoxidized, the epoxy rings are ring-opened to form hydroxyl groups (hereinafter also referred to as a post epoxidation hydroxyl group-providing method), a method (3) wherein after double bonds of a natural fat/oil are reacted with carbon monoxide and hydrogen in the presence of a specific metal catalyst to form carbonyl, hydrogen is further reacted therewith to introduce primary hydroxyl groups, a method (4) wherein the method (2) or the method (3) is carried out after the method (1), and a method (5) wherein the method (1) is carried out after the method (2) or the method (3).

Among these methods, the methods (1) and (2) which are carried out individually, are preferred from the viewpoint of cost merit. Now, the methods (1) and (2) will be further described.

### (1) BLOWING METHOD

This is a method wherein by blowing air or oxygen in a natural fat/oil, oxidative crosslinking is caused between unsaturated double bonds, and at the same time, hydroxyl groups are formed. Further, a polyhydric alcohol may be introduced by an ester exchange reaction. In such a method, depending on the type of an oil/fat to be used as a raw material and the oxidation state during blowing, the molecular weight and the hydroxyl value of a product (a polyol derived from a natural fat/oil) may be changed.

The mass average molecular weight (Mw) of a polyol derived from a natural fat/oil to be produced by such a method by using soybean oil as a raw material, is usually at least 1,500, preferably from 5,000 to 500,000, more preferably from 10,000 to 100,000. Mw/Mn is usually at least 2, preferably from 3 to 15. If the value of the mass average molecular weight is too low, oxidation polymerization and formation of hydroxyl groups tend to be insufficient, whereby the crosslinkability tends to be poor. If it is too high, the flowability tends to decrease.

The polyol derived from a natural fat/oil (aerated soybean oil) obtained by providing soybean oil with hydroxyl groups by a blowing method may, for example, be Soyol (tradename) series manufactured by Urethane Soy Systems Company.

### (2) POST EPOXIDATION HYDROXYL GROUP-PROVIDING METHOD

This is a method wherein after unsaturated double bonds of a natural fat/oil are epoxidized by having an oxidizing agent acted thereto, the epoxy groups are ring-opened to provide hydroxyl groups in the presence of an alcohol by using a cationic polymerization catalyst. As the oxidizing agent, a peroxide such as peracetic acid is used.

The epoxy equivalent in the epoxidized natural fat/oil can be controlled by the ratio of an iodine fat/oil to be used as a raw material and the amount of an oxidizing agent to be used based on the iodine value, and the conversion. By the epoxy equivalent in the epoxidized natural fat/oil, it is possible to control the hydroxyl value in a product (a polyol derived from a natural fat/oil). The molecular weight of the product (the polyol derived from a natural fat/oil) changes depending on the amount of an alcohol which is a ring-opening initiator, at the time of providing hydroxyl groups. When the alcohol is in an extremely large amount, it is possible to reduce the molecular weight, but the reaction efficiency becomes poor, and a cost merit is poor. If the alcohol is in a small amount, a ring-opening polymerization reaction between the epoxidized soybean oil molecules may proceed, whereby the molecular weight may rapidly be increased, and the molecules may be gelled.

For example, the epoxidized soybean oil having soybean oil epoxidized is commercially available, and specifically, it may, for example, be ADK CIZER O-130P, tradename, manufactured by ADEKA CORPORATION. As the cationic polymerization catalyst, it is possible to use the same cationic polymerization catalyst as the polymerization catalyst (a) which is used for ring-opening polymerization of the alkylene oxide (c) with the initiator (b). For example, it is possible to use boron trifluoride diethyl etherate (BF₃Et₂O). As the alcohol, it is possible to use, for example, dehydrated methanol. The reaction to provide hydroxyl groups by ring-opening the epoxidized soybean oil, can be carried out by a process wherein after dropwisely adding the epoxidized soybean oil to a solution mixture of the cationic polymerization catalyst and the alcohol, the catalyst is removed by an adsorption filtration.

The mass average molecular weight (Mw) of the polyol derived from a natural fat/oil to be produced by the method by using the epoxidized soybean oil as a raw material, is usually at least 1,500, preferably from 1,800 to 5,000. Mw/Mn is usually from 1.2 to 1.9.

### ALKYLENE OXIDE

An alkylene oxide to be used in the present invention is not particularly limited as long as it is a ring-opening polymerizable alkylene oxide.

Specific examples may be ethylene oxide (hereinafter sometimes referred to as EO), propylene oxide (hereinafter sometimes referred to as PO), styrene oxide, butylene oxide, cyclohexene oxide, a glycidyl compound such as glycidyl ether or glycidyl acrylate, and oxetane.

In the present invention, it is possible to use one type of alkylene oxide or two or more types of alkylene oxides. When two or more types of alkylene oxides are used in combination, it is possible to produce one type of the first polyol (A1) by using either polymerization method of block polymerization or random polymerization, or by using a combination of both block polymerization and random polymerization.

As the alkylene oxide (c) in the present invention, it is preferred to use at least propylene oxide, more preferably ethylene oxide and propylene oxide. The molar ratio of propylene oxide/ethylene oxide is preferably in a range of from 100/0 to 20/80 (that is, the mass ratio: 100/0 to 25/75). The molar ratio of propylene oxide/ethylene oxide is more preferably from 100/0 to 40/60 (that is, the mass ratio: 47/53), particularly preferably from 100/0 to 50/50 (that is, the mass ratio: 57/43). Further, the molar ratio of propylene oxide/ethylene oxide is from 99/1 to 60/40 (that is, the mass ratio: 99/1 to 66/34).

As compared with a case where only propylene oxide is used, when propylene oxide and ethylene oxide are used in combination, the proportion of terminal primary hydroxyl groups of the first polyol (A1) to be obtained is larger. In the first polyol (A1), the proportion of the terminal primary hydroxyl groups is preferably from 1 to 60 mol% based on the total number of hydroxyl groups per molecule of the polyol.

In the total mass of the propylene oxide and ethylene oxide, when ethylene oxide is at most 75 mass%, the reactivity becomes proper, such being desirable from the viewpoint of moldability.

In the polyol (A1), the content of a nonpetroleum type component (hereinafter referred to also as a biomass degree, which is the ratio of the initiator (b) to the total mass of the initiator (b) and the alkylene oxide (c)), is larger than 85%, preferably at least 87%, more preferably at least 90%. By having a biomass degree of larger than 85%, it is possible to increase the content of a component derived from a natural fat/oil.

### ANOTHER CYCLIC COMPOUND

When the first polyol (A1) is to be produced, it is permitted that a monomer made of another cyclic compound other than the alkylene oxide (c) is present in the reaction system.

Such a cyclic compound may be a cyclic ester such as ε-caprolactone or lactide, or a cyclic carbonate such as ethylene carbonate, propylene carbonate or neopentyl carbonate. They may be random-polymerizable or block-polymerizable.

Especially, it is preferred to use a lactide derived from lactic acid obtained by fermentation of sugar derived from a plant, since it is thereby possible to further increase the biomass degree in the first polyol (A1).

### POLYMERIZATION CATALYST (a)

A polymerization catalyst (a) is a catalyst which does not accelerate hydrolysis of a glyceride structure derived from a natural fat/oil, and it is preferred to use at least one member selected from a coordination anionic polymerization catalyst and a cationic polymerization catalyst. More preferred is a coordination anionic polymerization catalyst.

### COORDINATION ANIONIC POLYMERIZATION CATALYST

As the coordination anionic polymerization catalyst, it is possible to suitably use a known one. Especially, a double metal cyanide complex catalyst (hereinafter referred to as DMC (Double Metal Cyanide)) having an organic ligand, is preferred.

The double metal cyanide complex having an organic ligand can be produced by a known production method. For example, it is possible to produce it by a method described in JP-A-2003-165836, JP-A-2005-15786, JP-A-7-196778 or JP-A-2000-513647.

Specifically, it is possible to produce it by a process (i) wherein in an aqueous solution, an organic ligand is coordinated to a reaction product obtained by reacting a halogenated metal salt with an alkali metal cyanometalate, followed by separation of a solid component, and the separated solid component is further washed with an organic ligand aqueous solution, or a process (ii) wherein in the organic ligand aqueous solution, a reaction product (a solid component) obtained by reacting a halogenated metal salt with an alkali metal cyanometalate, is separated, and the separated solid component is further washed with the organic ligand aqueous solution.

In the process (i) or (ii), it is also possible to prepare a double metal cyanide complex catalyst in a slurry form in such a manner that a cake (a solid component) obtained by washing and filtrating/separating the above reaction product, is redispersed in the organic ligand aqueous solution containing at most 3 mass% of a polyether compound based on the cake, followed by distillating a volatile component. In order to produce the first polyol (A1) which is highly reactive and has a narrow molecular weight distribution, it is particularly preferred to use such a slurry catalyst.

The polyether compound to be used for preparing the slurry catalyst is preferably a polyether polyol or a polyether monool. Specifically, it is preferably a polyether monool or a polyether polyol, which is produced by ring-opening polymerization of an alkylene oxide with an initiator selected from a monoalcohol and a polyhydric alcohol by using an alkali catalyst or a cationic catalyst, and which has from 1 to 12 average hydroxyl groups per molecule and has a mass average molecular weight of from 300 to 5,000.

Further, as the DMC catalyst, a zinc hexacyanocobalt complex is preferred.

As the organic ligand in the DMC catalyst, it is possible to use e.g. an alcohol, ether, ketone, ester, amine or amide.

The organic ligand is preferably tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (also called triglyme), iso-propyl alcohol or a dioxane. The dioxane may be 1,4-dioxane or 1,3-dioxane, but it is preferably 1,4-dioxane. Such organic ligands may be used alone or in combination as a mixture of two or more of them.

Among them, it is preferred to use tert-butyl alcohol as the organic ligand. Therefore, it is preferred to use a double metal cyanide complex catalyst having tert-butyl alcohol as at least one part of the organic ligand. Such a double metal cyanide complex catalyst having an organic ligand provides high activity, and it is thereby possible to produce the first polyol (A1) having a low total unsaturation degree. With respect to a polyether before purification, which is obtained by ring-opening polymerization of the alkylene oxide (c) by using a small amount of highly reactive double metal cyanide complex catalyst, it has little catalyst residue, and thus it is possible to further reduce the catalyst residue of the polyoxyalkylene polyol after purification.

### CATIONIC POLYMERIZATION CATALYST

The cationic polymerization catalyst may, for example, be lead tetrachloride, tin tetrachloride, titanium tetrachloride, aluminum trichloride, zinc chloride, vanadium trichloride, antimony trichloride, metal acetylacetonate, phosphorus pentafluoride, antimony pentafluoride, boron trifluoride, a boron trifluoride-coordinated compound (for example, boron trifluoride diethyl etherate, boron trifluoride dibutyl etherate, boron trifluoride dioxanate, boron trifluoride acetic anhydride or a boron trifluoride triethylamine complex compound); an inorganic or organic acid such as perchloric acid, acetyl perchlorate, t-butyl perchlorate, hydroxyacetic acid, trichloroacetic acid, trifluoroacetic acid, p-toluene sulfonic acid or trifluoromethane sulfonic acid; a metal salt of an organic acid; a composite salt compound such as triethyloxonium tetrafluoroborate, triphenylmethyl hexafluoroantimonate, allyldiazonium hexafluorophosphate or allyldiazonium tetrafluoroborate; an alkyl metal salt such as diethylzinc, triethylaluminum or diethylaluminum chloride; heteropolyacid, isopolyacid; MoO₂(diketonate)Cl or MoO₂(diketonate)OSO₂CF₃; or an aluminum or a boron compound having at least one aromatic hydrocarbon group containing a fluorine element or an aromatic hydrocarbon oxy group containing a fluorine element. Among them, particularly preferred is MoO₂(diketonate)Cl, MoO₂(diketonate)OSO₂CF₃, trifluoromethanesulfonic acid, boron trifluoride, boron trifluoride diethyl etherate, boron trifluoride dibutyl etherate, boron trifluoride dioxanate, boron trifluoride acetic anhydrate or a boron trifluoride coordinated compound such as a boron trifluoride triethylamine complex compound.

Further, the cationic polymerization catalyst in the present invention is preferably an aluminum or boron compound having at least one aromatic hydrocarbon group containing a fluorine element or an aromatic hydrocarbon oxy group containing a fluorine element. The aromatic hydrocarbon group containing a fluorine element is preferably at least one member selected from the group consisting of pentafluorophenyl, tetrafluorophenyl, trifluorophenyl, 3,5-bis(trifluoromethyl)trifluorophenyl, 3,5-bis(trifluoromethyl)phenyl, β-perfluoronaphthyl and 2,2',2"-perfluorobiphenyl. The aromatic hydrocarbon oxy group containing a fluorine element is preferably a hydrocarbon oxy group having an oxygen element bonded to the above aromatic hydrocarbon group containing a fluorine element.

The aluminum or boron compound having at least one aromatic hydrocarbon group containing a fluorine element or an aromatic hydrocarbon oxy group containing a fluorine element, is preferably a boron compound or an aluminum compound as a Lewis acid, described in for example, JP-A-2000-344881, JP-A-2005-82732 or WO03/000750 Or, it is preferably a boron compound or an aluminum compound as an onium salt, described in JP-A-2003-501524 or JP-A-2003-510374.

Specific examples of the Lewis acid may be tris(pentaflorophenyl)borane, tris(pentaflorophenyl)aluminum, tris(pentaflorophenyloxy)borane and tris(pentaflorophenyloxy)aluminum. Among them, tris(pentaflorophenyl)borane is a particularly preferred catalyst since it has a high catalytic activity for the ring-opening polymerization of the alkylene oxide.

A counter cation of the onium salt is preferably trityl cation or anilinium cation, and the onium salt is particularly preferably trityl tetrakis(pentafluorophenyl)borate or N,N'-dimethylanilinium tetrakis(pentafluorophenyl)borate.

### ANOTHER CATALYST WHICH DOES NOT ACCELERATE HYDROLYSIS OF GLYCERIDE STRUCTURE DERIVED FROM NATURAL FAT/OIL

A catalyst which does not accelerate hydrolysis of a glyceride structure derived from a natural fat/oil, other than the above-mentioned coordination anionic polymerization catalyst or cationic polymerization catalyst, may be a phosphazenium catalyst. The phosphazenium catalyst can be obtained by a known method such as a method described in, for example, JP-A-11-106500.

Specifically, tetrakis[tris(dimethylamino)phosphoranylidenamino] phosphonium hydroxide may be mentioned.

### METHOD OF PRODUCING FIRST POLYOL (A1)

In a reactor, in the presence of the polymerization catalyst (a), the alkylene oxide (c) is ring-opening polymerized with the initiator (b) to produce the first polyol (A1). The ring-opening polymerization reaction of the alkylene oxide can be carried out by optionally using a known method.

Specifically, into a pressure proof reactor equipped with a stirrer and a cooling jacket, the initiator is first introduced, and the polymerization catalyst is added thereto. Then, to the mixture of the initiator and the polymerization catalyst, the alkylene oxide is added to carry out a reaction, whereby the first polyol (A1) is produced.

In the present invention, it is possible to homopolymerize one alkylene oxide with the initiator, and it is also possible to block-polymerize and/or random-polymerize two or more alkylene oxides.

The amount of the polymerization catalyst to be used for the polymerization reaction may be any amount as long as it is an amount required for ring-opening polymerization of the alkylene oxide.

Now, as the polymerization catalyst, a case (1) of using a coordination anionic polymerization catalyst such as a DMC catalyst and a case (2) of using a cationic polymerization catalyst will be described separately.

In the case (1) of using the coordination anionic polymerization catalyst, as the amount of the polymerization catalyst to be used for the polymerization reaction is made smaller, it is possible to reduce the amount of the polymerization catalyst to be contained in the polyoxyalkylene polyol as a product. As a result, it is possible to suppress the influence of the polymerization catalyst on the reactivity of the first polyol (A1) to be obtained by the polymerization reaction with a polyisocyanate compound (B), or on the physical properties of a functional lubricant or a polyurethane product produced by using the first polyol (A1) as a raw material.

Usually, after the ring-opening polymerization reaction of the initiator with the alkylene oxide, the polymerization catalyst is removed from the obtained polyoxyalkylene polyol. However, in a case where, as described above, the amount of the polymerization catalyst remained in the polyoxyalkylene polyol is so small that no adverse effect is caused, it is possible to use the obtained polyoxyalkylene polyol directly in the next step without carrying out the step of removing the polymerization catalyst, whereby it is possible to increase the production efficiency of the polyoxyalkylene polyol.

The amount of the polymerization catalyst (a) to be used for carrying out the polymerization reaction of the alkylene oxide (c), is set so that a solid catalyst component in the polymerization catalyst (a component having a polyether compound, excess ligand, etc. in a slurry catalyst removed) is present in an amount of preferably from 10 to 150 ppm, more preferably from 20 to 120 ppm in a polymer immediately after the polymerization. By adjusting the solid catalyst component of the polymerization catalyst contained in the polymer, to be at least 10 ppm, sufficient polymerization catalyst activity is obtained, and further since the sufficient polymerization activity is obtained in an amount of at most 150 ppm, it is not economical to use a more amount of the catalyst component. However, there is no problem to use a catalyst containing more than 150 ppm of the solid catalyst component based on a polymer to be obtained.

The ring-opening polymerization temperature of the alkylene oxide is preferably from 30 to 180°C, more preferably from 70 to 160°C, particularly preferably from 90 to 140°C. If the polymerization temperature is lower than 30°C, ring-opening polymerization of the alkylene oxide may not sometimes proceed, and if the temperature is higher than 180°C, the polymerization activity of the polymerization catalyst may sometimes decrease.

After the completion of the polymerization reaction of the alkylene oxide (c), when the polymerization catalyst contained in the obtained reaction product, is to be removed, the process for such removal is preferably, for example, a process wherein the catalyst is adsorbed by using an adsorbent selected from a synthesized silicate (magnesium silicate or aluminum silicate), an ion-exchange resin and an activated clay, and the adsorbent is then removed by filtration. Other than that, there is a process wherein the catalyst is neutralized by using a neutralizer selected from an amine, an alkali metal hydroxide, an organic acid and a mineral acid, followed by removal by filtration. From such a viewpoint that the hydrolysis does not proceed, it is preferred to use the former process of using an adsorbent.

In the case (2) of producing a polyoxyalkylene polyol by using a cationic polymerization catalyst, especially in a case (2-1) where an alkylene oxide has at least 3 carbon atoms, preferred is a process of using, as the cationic polymerization catalyst, at least one member selected from the group consisting of an aluminum or a boron compound, which has at least one fluorine-substituted phenyl group or fluorine-substituted phenoxy group.

In the process (2-1), the amount of the cationic polymerization catalyst to be used is preferably from 10 to 120 ppm, more preferably from 20 to 100 ppm, based on the initiator. From the viewpoint of the cost and purification of a polyoxyalkylene polyol to be obtained, the amount of the catalyst to be used is preferably as small as possible, but by adjusting the amount of the cationic catalyst to be used, to a level of at least 10 ppm, it is possible to obtain a properly high alkylene oxide polymerization rate.

Particularly, it is preferred to ring-opening polymerize from 1 to 30, preferably from 1 to 20, particularly preferably from 2 to 15, on the average, of alkylene oxide molecueles per hydroxyl group of the initiator. By having at least 2 alkylene oxide molecules attached per hydroxyl group of the initiator, it becomes easier to further increase the proportion of the primary hydroxyl groups in the total terminal hydroxyl groups of a polyoxyalkylene polyol to be obtained, to a level of more than 45%. Further, it is thereby possible to suppress the amount of a multimer byproduct to be less.

In the process (2-1), the reaction is preferably carried out by maintaining the temperature inside of the reactor at a desired temperature by cooling the reactor and adjusting the supplying rate of the alkylene oxide to the reactor. The temperature inside of the reactor is usually from -15 to 140°C, preferably from 0 to 120°C, particularly preferably from 20 to 90°C. The polymerization time is usually from 0.5 to 24 hours, preferably from 1 to 12 hours.

The case (1) of using the coordination anionic polymerization catalyst and the case (2) of using the cationic polymerization catalyst have a commonality that the polymerization reaction of an alkylene oxide is preferably carried out under a good stirring condition. When a stirring method of using a usual stirring blade, is used, it is preferred to increase the rotational speed of the stirring blade within a range not to deteriorate the stirring efficiency by inclusion of a large amount of gas of a gas phase taken into the reaction liquid. Further, in the polymerization reaction of the alkylene oxide, it is preferred to reduce the supplying rate of the alkylene oxide to the reactor, as much as possible, from the viewpoint that the molecular weight distribution of the polymer (the first polyol (A1)) to be obtained can be narrowed. On the other hand, if it is too low, the production efficiency will be deteriorated. Therefore, it is preferred to set the supplying rate of the alkylene oxide taking these factors into consideration.

The polymerization reaction of the alkylene oxide can also be carried out by using a reaction solvent. The preferred reaction solvent may, for example, be an aliphatic hydrocarbon such as hexane, heptane or cyclohexane; an aromatic hydrocarbon such as benzene, toluene or xylene; or a halogen type solvent such as chloroform or dichloromethane. Further, the amount of the solvent to be used is not particularly limited, and it is possible to use the solvent in a desired amount.

Further, by adding an antioxidant or an anticorrosive to the obtained polyoxyalkylene polyol (the first polyol (A1)), it is possible to prevent deterioration during storage for a long period of time.

In the present invention, the mass average molecular weight of the first polyol is preferably from 1,500 to 500,000, more preferably from 1,500 to 300,000, particularly preferably from 2,000 to 100,000.

The first polyol (A1) obtained in such a manner is one produced by using the initiator (b) derived from a natural fat/oil, and, as such, is environmentally preferred. Here, as the initiator (b), one having hydroxyl groups provided to a natural fat/oil through a chemical reaction, is used, whereby it is possible to suppress the cost of the raw material to be low. Therefore, it is possible to inexpensively produce the first polyol (A1) containing a product derived from a natural fat/oil.

### SECOND POLYOXYALKYLENE POLYOL (A2)

The second polyol (A2) is a polyoxyalkylene polyol other than the first polyol (A1), and it is one having from 2 to 8 functional groups on average and a hydroxyl value of from 20 to 160 mgKOH/g.

As the second polyol (A2), it is possible to suitably use one satisfying the above characteristics, among known polyoxyalkylene polyols derived from petroleum, as polyurethane raw materials.

If the average number of the functional groups in the second polyol (2) is less than 2, the durability or the riding comfort of the foam may sometimes be low, and if it is more than 8, a flexible foam to be produced becomes rigid, whereby mechanical properties such as elongation tend to be deteriorated, such being undesirable.

If the hydroxyl value of the second polyol (A2) is less than 20, the viscosity tends to be high, whereby the workability becomes deteriorated, and if it is more than 160, the flexible foam to be produced becomes rigid, whereby mechanical properties such as elongation tend to be deteriorated, such being undesirable.

In the present, invention, the mass average molecular weight of the second polyol (A2) is preferably from 700 to 22,000, more preferably from 1,500 to 20,000, particularly preferably from 2,000 to 1,5000.

Examples of such second polyol (A2) are preferably one obtained by ring-opening polymerization of a cyclic ether compound with an initiator in the presence of ring-opening polymerization catalyst, a polyester polyol or a polycarbonate polyol.

The ring-opening polymerization catalyst to be used for preparing the second polyol (A2) may, for example, be an alkali metal compound catalyst such as a sodium type catalyst, a potassium type catalyst or a cesium type catalyst, a cationic polymerization catalyst, a double metal cyanide complex catalyst or a phosphazenium compound.

The initiator may, for example, be ethylene glycol, diethylene glycol, propylene glycol, dipropylene glycol, neopentyl glycol, 1,4-butanediol, 1,6-hexanediol, glycerin, trimethylolpropane, pentaerythritol, diglycerin, dextrose, sucrose, bisphenol A, ethylenediamine or a polyoxyalkylene polyol having a molecular weight lower than the desired product obtained by adding an alkylene oxide thereto.

The cyclic ether compound is preferably, for example, an alkylene oxide having at least 2 carbon atoms. Specifically, ethylene oxide, propylene oxide, 1,2-butylene oxide, 2,3-butylene oxide or styrene oxide may be mentioned. It is preferred to use propylene oxide or ethylene oxide. When the ethylene oxide is used, the content of the ethylene oxide in the second polyol (A2) is preferably at most 30 mass%, more preferably at most 25 mass%. When the content of the ethylene oxide is at most 30 mass%, the reactivity becomes proper, and the moldability becomes good.

The sodium or potassium type catalyst may be sodium metal, potassium metal, a sodium or potassium alkoxide such as sodium methoxide, sodium ethoxide, sodium propoxide, potassium methoxide, potassium ethoxide or potassium propoxide, sodium hydroxide, potassium hydroxide, sodium carbonate or potassium carbonate.

Further, the cesium type catalyst may, for example, be cesium type metal, a cesium alkoxide such as cesium methoxide, cesium ethoxide or cesium propoxide, cesium hydroxide, or cesium carbonate.

As the double metal complex catalyst, it is possible to use the same double metal complex catalyst as mentioned as the polymerization catalyst (a).

As the cationic polymerization catalyst, it is possible to use the same cationic polymerization catalyst as mentioned as the polymerization catalyst (a).

The polyester polyol as the second polyol (A2) may, for example, be a lactone type polyol such as an ε-caprolactone ring-opening polymerized product or β-methyl-δ-valerolactone ring-opening polymerized product, or one obtained by condensing a low-molecular-weight polyol such as a C₂₋₁₀ divalent alcohol such as ethylene glycol or propylene glycol; a C₂₋₁₀ trivalent alcohol such as glycerin, trimethylolpropane or trimethylolethane; a tetravalent alcohol such as pentaerythritol, diglycerin; or a sugar such as sorbitol or sucrose, with a carboxylic acid such as a C₂₋₁₀ dicarboxylic acid such as succinic acid, adipic acid, maleic acid, fumaric acid, phthalic acid or isophthalic acid; or a C₂₋₁₀ acid anhydride such as succinic anhydride, maleic anhydride or phthalic anhydride.

The polycarbonate polyol as the second polyol (A2) may, for example, be one obtained by a dehydrochlorination reaction of phosgene with a low-molecular-weight alcohol to be used for synthesis of the polyester polyol, or by an ester exchange reaction of the low-molecular-weight alcohol with diethylene carbonate, dimethyl carbonate or diphenyl carbonate.

As the second polyol (A2), it is possible to use one type of polyoxyalkylene polyol, or it is also possible to use two or more types of polyoxyalkylene polyols as mixed. When two or more types of polyoxyalkylene polyols are used as mixed, the average number of the functional groups, the hydroxyl value and the mass average molecular weight of the polyoxyalkylene polyols are preferably in the above preferred ranges.

In the present invention, when the first polyol (A1) and the second polyol (A2) are used in combination as the polyol (A), the mass ratio of the first polyoxyalkylene polyol (A1) to the second polyol (A2), (A1)/(A2), is preferably in a range of from 10/90 to 90/10, more preferably from 15/85 to 80/20. In the total mass of the polyols (A1) and (A2), when the amount of the second polyol (A2) to be used is at least 10 mass%, the moldability of a flexible polyurethane foam is suitably improved, and it is preferably at most 90 mass% from the viewpoint of the prevention of global warming.

### POLYMER PARTICLES-DISPERSED POLYOL

In the present invention, as the first polyol (A1), it is possible to use a polymer particles-dispersed polyol having the polyol (A1) as the base polyol.

Further, as the second polyol (A2), it is possible to use a polymer particles-dispersed polyol having the second polyol (A2) as the base polyol.

Further, it is possible that a polymer particles-dispersed polyol having the first polyol (A1) as the base polyol, is obtained, and then mixed with the second polyol (A2) to obtain a polyol (A) having the polymer particles stably dispersed. Further, similarly, it is possible that a polymer particles-dispersed polyol having the second polyol (A2) as the base polyol, is obtained, and then mixed with the first polyol (A1) to obtain a polyol (A) having the polymer particles stably dispersed.

The polymer particles-dispersed polyol is a dispersion system wherein polymer particles (dispersoid) are stably dispersed in a polyoxyalkylene polyol as a base polyol (dispersion medium). The polymer of the polymer particles may be an addition polymerization type polymer or a condensation polymerization type polymer. A specific example may be an addition polymerization type polymer such as a copolymer or homopolymer of acrylonitrile, styrene, a methacrylate, an acrylate or other vinyl monomers; or a condensation polymerization type polymer such as polyester, polyurea, polyurethane or melamine. By the presence of the polymer particles, the hydroxyl value of the entire polymer particles-dispersed polyol is usually lower than the hydroxyl value of the base polyol.

The content of the polymer particles in the polymer particles-dispersed polyol is preferably at most 50 mass%. The amount of the polymer particles is not required to be particularly large. However, even if it is too large, there is no particular disadvantage except for an economical aspect. The amount is usually preferably from 3 to 50 mass%, more preferably from 3 to 35 mass%. To disperse the polymer particles in the base polyol is useful to improve the hardness, air flow and other physical properties of the foam. Further, when the mass of the polymer particles-dispersed polyol is used for a calculation, the mass of the polymer particles is not included.

When the polymer particles-dispersed polyol is used as the first polyol (A1), the numerical value for the mass average molecular weight relating to the above first polyol (A1), is the numerical value for the base polyol.

When the polymer particles-dispersed polyol is used as the second polyol (A2), the numerical values for the average number of functional groups, the hydroxyl value and the mass average molecular weight relating to the above second polyol (A2), are the numerical values for the base polyol.

### ANOTHER HIGH-MOLECULAR-WEIGHT ACTIVE HYDROGEN COMPOUND

As a compound to be reacted with the polyisocyanate compound (B), it is possible to use the polyol (A) and another high-molecular-weight active hydrogen compound in combination. Such another high-molecular-weight active hydrogen compound may, specifically, be a high-molecular-weight polyamine having at least 2 primary amino groups or secondary amino groups, a high-molecular-weight compound having at least one primary amino group or secondary amino group and at least one hydroxyl group, or a piperazine type polyol.

The molecular weight of such another high-molecular-weight active hydrogen compound is preferably at least 400, more preferably at least 800, per functional group. Further, the number of functional groups per molecule is preferably from 2 to 8. The molecular weight per functional group is preferably at most 5,000.

Such another high-molecular-weight active hydrogen compound may be a compound obtained by converting some or all hydroxyl groups in the polyoxyalkylene polyol (the first polyol (A1) or the second polyol (A2)) to amino groups, or a compound obtained in such a manner that a prepolymer having isocyanate groups at its terminals, is obtained by reacting the polyoxyalkylene polyol with an excess equivalent of a polyisocyanate compound, and the isocyanate groups of the prepolymer are converted to amino groups by hydrolysis.

Further, the piperazine type polyol is a polyoxyalkylene polyol obtained by ring-opening polymerization of an alkylene oxide with a piperazine. The piperazine in present invention means not only piperazine but also a substituted piperazine wherein a hydrogen atom in the piperazine is substituted by an organic group such as an alkyl group or an aminoalkyl group. The piperazine is required to have at least two active hydrogen atoms which may be reacted with an alkylene oxide. In such a piperazine type polyol obtained by ring-opening polymerization of an alkylene oxide, two nitrogen atoms constituting a piperazine ring constitute tertiary amines.

Specific examples of the piperazine may be piperazine; an alkyl piperazine in which a hydrogen atom bonded to a carbon atom constituting the ring is substituted by a lower alkyl group, such as 2-methylpiperazine, 2-ethylpiperazine, 2-butylpiperazine, 2-hexylpiperazine, 2,5-, 2,6-, 2,3- or 2,2-dimethylpiperazine or 2,3,5,6- or 2,2,5,5-tetramethylpiperazine; and an N-aminoalkylpiperazine in which a hydrogen atom bonded to a nitrogen atom constituting the ring, is substituted by an aminoalkyl group, such as N-(2-aminoethyl)piperazine. Among such piperazines, preferred is a substituted piperazine, and more preferred is a substituted piperazine having at least 3 nitrogen atoms in a molecule, such as piperazine having hydrogen substituted by an aminoalkyl group. Further, among substituted piperazines, an N-substituted piperazine is preferred, an N-aminoalkylpiperazine is further preferred, and N-(aminoethyl)piperazine is particularly preferred.

An alkylene oxide to be ring-opening polymerized with such a piperazine, is preferably an alkylene oxide having at least 2 carbon atoms, and specifically, it may be ethylene oxide, propylene oxide, 1,2-butylene oxide, 2,3-butylene oxide or styrene oxide.

In the present invention, when the polyol (A) and another high-molecular-weight active hydrogen compound are used in combination, the amount of such another high-molecular-weight active hydrogen compound, to be used, is preferably at most 20 mass%, based on the total amount of both of them. If the amount to be used exceeds 20 mass%, the reactivity may be increased so much that the moldability, etc. may be deteriorated.

### POLYISOCYANATE COMPOUND (B)

With respect to the polyisocyanate compound (B) (hereinafter sometimes referred to as the polyisocyanate (B)), the polyisocyanate (B) may be an aromatic polyisocyanate having at least 2 isocyanate groups, a mixture of two or more of such compounds, or a modified-polyisocyanate obtained by modifying it. Specifically, it may, for example, be a polyisocyanate such as tolylene diisocyanate (TDI), diphenylmethane diisocyanate (MDI) or polymethylene polyphenyl polyisocyanate (name: crude MDI), or its prepolymer type modified product, nurate modified product, urea modified product or carbodiimide modified product.

In the polyisocyanate (B), diphenylmethane diisocyanate type polyisocyanate and/or polymethylene polyphenyl polyisocyanate type polyisocyanate in the polyisocyanate component is preferably in an amount of from 0 mass% to 100 mass%, particularly preferably from 5 mass% to 80 mass%, and further preferably from 10 mass% to 60 mass%. When diphenylmethane diisocyanate type polyisocyanate and/or polymethylene polyphenyl polyisocyanate type polyisocyanate is in an amount of at most 80 mass%, the physical properties such as durability, or touch, etc. of a foam become good.

The isocyanate (B) may be a prepolymer. Specifically, it may be a natural fat/oil polyol in which tolylene diisocyanate, a diphenylmethane diisocyanate type polyisocyanate or a polymethylene polyphenyl polyisocyanate type polyisocyanate, and a natural fat/oil, are provided with hydroxyl groups through a chemical reaction; a natural fat/oil-containing polyoxyalkylene polyol having an alkylene oxide added to the natural fat/oil polyol; or a prepolymer with the polyol (A).

The amount of the polyisocyanate (B) to be used is preferably in a range of from 80 to 125, particularly preferably in a range of from 85 to 120, as represented by 100 times of the number of isocyanate groups based on the total active hydrogen of the polyol (A) another high-molecular-weight active hydrogen compound, a crosslinking agent and water (usually, a numerical value represented by such 100 times is referred to as an isocyanate index).

### CROSSLINKING AGENT

In the present invention, it is possible to use a crosslinking agent as a case requires. The crosslinking agent is preferably one having from 2 to 8 active hydrogen-containing groups and a hydroxyl value of from 200 to 2,000 mgKOH/g. The crosslinking agent may, for example, be a compound which has at least 2 functional groups selected from hydroxyl groups, primary amino groups and secondary amino groups. Such crosslinking agents may be used alone or in combination as a mixture of two or more of them.

When the crosslinking agent has hydroxyl groups, from 2 to 8 hydroxyl groups are preferably contained, and such a crosslinking agent may be a polyhydric alcohol or a polyol such as a low-molecular-weight polyoxyalkylene polyol obtained by adding an alkylene oxide to the polyhydric alcohol or a polyol having a tertiary amino group.

Specific examples of the crosslinking agent having hydroxyl groups may be ethylene glycol, 1,4-butanediol, neopentyl glycol, 1,6-hexanediol, diethylene glycol, triethylene glycol, dipropylene glycol, monoethanolamine, diethanolamine, triethanolamine, glycerin, N-alkyl diethanol, a bisphenol A/alkylene oxide adduct, a glycerin/alkylene oxide adduct, a trimethylolpropane/alkylene oxide adduct, a pentaerythritol/alkylene oxide adduct, a sorbitol/alkylene oxide adduct, a sucrose/alkylene oxide adduct, an aliphatic amine/alkylene oxide adduct, an alicyclic amine/alkylene oxide adduct, a heterocyclic polyamine/alkylene oxide adduct, and an aromatic amine/alkylene oxide adduct, but the crosslinking agent is not limited thereto. Preferred is diethanolamine. When this compound is used, hysteresis loss is suited.

The heterocyclic polyamine/alkylene oxide adduct is obtained by adding an alkylene oxide to e.g. peperazine, a short-chain alkyl-substituted piperazine such as 2-methylpiperazine, 2-ethylpiperazine, 2-butylpiperazine, 2-hexylpiperazine, 2,5-, 2,6-, 2,3- or 2,2-dimethylpiperazine, or 2,3,5,6- or 2,2,5,5-tetramethylpiperazine, or an aminoalkyl-substituted piperazine such as 1-(2-aminoethyl)piperazine.

An amine type crosslinking agent having a primary amino group or secondary amino group may be an aromatic polyamine, an aliphatic polyamine or an alicyclic polyamine.

The aromatic polyamine is preferably an aromatic diamine. The aromatic diamine is preferably an aromatic diamine having at least one substituent selected from an alkyl group, a cycloalkyl group, an alkoxy group, an alkylthio group and an electron-attractive group, in an aromatic nucleus having amino groups bonded thereto, particularly preferably a diaminobenzene derivative. With respect to the above substituents except for the electron-attractive group, from 2 to 4 substituents are preferably bonded to the aromatic nucleus having amino groups bonded thereto, more preferably at least one at an ortho-position to the position where the amino group is bonded, particularly preferably, they are bonded at all positions.

With respect to the electron-attractive group, 1 or 2 groups are preferably bonded to the aromatic nucleus having amino groups bonded thereto. The electron-attractive group and another substituent may be bonded to one aromatic nucleus. The alkyl group, alkoxy group and alkylthio group preferably have at most 4 carbon atoms, and the cycloalkyl group is preferably a cyclohexyl group. The electron-attractive group is preferably a halogen atom, a trihalomethyl group, a nitro group, a cyano group or an alkoxycarbonyl group, particularly preferably a chlorine atom, a trifluoromethyl group or a nitro group.

The aliphatic polyamine may be a diaminoalkane having at most 6 carbon atoms, a polyalkylene polyamine, or a polyamine obtained by converting some or all hydroxyl groups in a low-molecular-weight polyoxyalkylene polyol to amino groups. Further, it is possible to use a polyamine having an aromatic nucleus, such as an aromatic compound having at least 2 aminoalkyl groups, an aromatic compound having a total of at least 2 aminoalkyl groups, or an aromatic compound having substituents as mentioned above.

The alicyclic polyamine may be a cycloalkane having at least 2 amino groups and/or aminoalkyl groups.

Specific examples of the amine type crosslinking agent may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, but they are not limited thereto.

Particularly preferred is diethyltoluenediamine (that is one type or a mixture of two or more types of 3,5-diethyl-2,4(or 2,6)-diaminotoluene), dimethylthiotoluenediamine, or a diaminobenzene derivative such as monochlorodiaminobenzene or trifluoromethyldiaminobenzene.

The amount of the crosslinking agent to be used is preferably from 0.1 to 10 parts by mass based on 100 parts by mass of the polyol (A).

### CATALYST (C)

When the polyol (A) and the polyisocyanate (B) are reacted with each other, a catalyst (C) is used.

The catalyst (C) is not particularly limited as long as it is a catalyst to accelerate a urethanization reaction. For example, it is preferably an amine compound, an organic metal compound, a reactive amine compound or a metal carboxylate. The reactive amine compound is an amine compound wherein a part of the amine compound structure is converted to a hydroxyl group or an amino group so as to be reactive with an isocyanate group. Further, an oligomerization catalyst to let isocyanate groups react each other, such as a metal carboxylate or the like, may be used depending on the object. Such catalysts may be used alone or in combination as a mixture of two or more of them.

The catalyst (C) is more preferably an amine compound, an organic metal compound or a reactive amine compound, and the organic metal compound is more preferably an organic tin compound.

Specific examples of the amine compound may be triethylenediamine, a dipropylene glycol solution of bis-((2-dimethylamino)ethyl)ether and an aliphatic amine such as a morpholine.

Specific examples of the reactive amine compound may be dimethylethanolamine, trimethylaminoethylethanolamine and dimethylaminoethoxyethoxyethanol.

The amount of the amine compound catalyst or the reactive amine compound catalyst to be used, is preferably at most 2.0 parts by mass, more preferably from 0.05 to 1.5 parts by mass, per 100 parts by mass in total of the polyol (A) and another high-molecular-weight active hydrogen compound.

The organic metal compound catalyst may, for example, be an organic tin compound, an organic bismuth compound, an organic lead compound or an organic zinc compound, and specific examples may be di-n-butyltin oxide, di-n-butyltin laurate, di-n-butyltin, di-n-butyltin diacetate, di-n-octyltin oxide, di-n-octyltin dilaurate, monobutyltin trichloride, di-n-butyltin dialkyl mercaptan, di-n-octyltin dialkyl mercaptan and tin 2-ethylhexanoate (tin octylate). The amount of the organic metal compound catalyst to be used is preferably at most 2.0 parts by mass, more preferably from 0.005 to 1.5 parts by mass, per 100 parts by mass in total of the polyol (A) and another high-molecular-weight active hydrogen compound.

### BLOWING AGENT (D)

In the present invention, a blowing agent (D) is preferably at least one member selected from water and an inert gas. It is more preferred to use at least water as the blowing agent (D). Specific examples of the inert gas may be air, nitrogen or liquified carbon dioxide. The amount of such a blowing agent to be used is not particularly limited. When only water is used as the blowing agent, the amount is preferably at most 10 parts by mass, more preferably from 0.1 to 8 parts by mass, per 100 parts by mass in total of the polyol (A) and another high-molecular-weight active hydrogen compound.

It is possible to use other blowing agents than water and the inert gas, in a proper amount depending on the requirement such as a blowing magnification.

### OTHER COMPONENTS

In order to form better foams, it is preferred to use a foam stabilizer. The foam stabilizer may, for example, be a silicone type foam stabilizer or a fluorine type foam stabilizer. The amount of the foam stabilizer to be used is preferably from 0.1 to 10 parts by mass per 100 parts by mass in total of the polyol (A) and another high-molecular-weight active hydrogen compound. Other formulating agents which may optionally be used, may, for example, be a filler, a stabilizer, a colorant, a flame retardant, a cell opener, etc. The cell opener is preferably a polyol having from 2 to 8 functional groups on average, a hydroxyl value of from 20 to 100 mgKOH/g and an ethylene oxide content of from 50 to 100 mass%. Especially, use of the cell opener is preferred from the viewpoint of the moldability of a flexible polyurethane foam, specifically, the reduction of tight cells.

### PROCESS FOR PRODUCING FLEXIBLE POLYURETHANE FOAM

The process for producing a flexible polyurethane foam of the present invention may be carried out by a method in which a reactive mixture is injected into a sealed mold, followed by foam-molding (a molding method) or a method in which a reactive mixture is foamed in a open system (a slab method).

When the flexible polyurethane foam is produced by foaming in a mold, it is preferred to use a method of directly injecting mixture made by mixing the above-described components to a mold (that is, a reaction-injection molding method) or a method in which the reactive mixture made by mixing the above-described components, is injected into a mold in an open state, followed by sealing. For example, it is preferably carried out by a method of injecting the reactive mixture into a mold by using a low-pressure foaming machine or a high-pressure foaming machine, i.e. a method in which the reactive mixture is injected into a mold in an open state, followed by sealing. The high-pressure foaming machine is preferably of a usual type to mix two liquids, i.e. one of the liquids being the polyisocyanate (B) and the other liquid being a mixture of all raw materials other than the polyisocyanate (B). Depending on a case, it is possible to form a reactive mixture with three components in total by having the catalyst (C) or the cell opener as a separate component (which is used usually as dispersed or dissolved in a part of a high-molecular-weight polyol).

The temperature of the reactive mixture is preferably from 10 to 40°C. When it is lower than 10°C, the viscosity of the raw materials significantly increases, whereby liquid mixing of the reaction liquids becomes deteriorated. When it is higher than 40°C, the reactivity significantly increases, whereby the moldability, etc. become deteriorated.

The temperature of the mold during injection is not particularly limited, but it is preferably from 10°C to 80°C, particularly preferably from 30°C to 70°C.

The curing time is not particularly limited, but it is preferably from 3 to 20 minutes, particularly preferably from 3 to 10 minutes, further preferably from 1 to 7 minutes. If the curing time is longer than 20 minutes, such is not desirable from the viewpoint of productivity, and if it is shorter than 1 minute, insufficient curing becomes a problem.

When the flexible polyurethane foam is produced by slab-foaming, it is possible to use a known method such as a one shot method, a semiprepolymer method or a prepolymer method. For the production of the flexible polyurethane foam, it is possible to use a production apparatus which is usually used.

According to the production process of the present invention, as shown in the following Examples, it is possible to suitably form a flexible polyurethane foam by using a polyol derived from a natural fat/oil (the first polyol (A1)). According to the production process of the present invention, it is possible to obtain a flexible polyurethane foam having high rebound resilience and good cushioning characteristic.

The flexible polyurethane foam produced by the present invention is suitable as an interior material for a vehicle, and particularly, it can be used for sheet cushions, sheet backs, head rests, arm rests, etc. Further, its application is not limited thereto, but other applicable fields may, for example, be an interior material for a railway vehicle, beddings, mattresses, cushions, etc.

### EXAMPLES

Now, the present invention will be described in further detail with reference to Examples and Comparative Examples, but it should be understood that the present invention is by no means limited thereto.

### PREPARATION EXAMPLE 1: PREPARATION OF INITIATOR (b)

As polyols derived from a natural fat/oil produced by a blowing method by using soybean oil as a raw material, tradename: Soyol R2-052F manufactured by Urethane Soy Systems Company was used as the initiator (b1), and Soyol R3-170G was used as the initiator (b2). The measured values of the initiator (b1) were such that the hydroxyl value was 45.3 (mgKOH/g), the acid value was 4.3 (mgKOH/g), Mn (the number average molecular weight) was 1,578, Mw (the mass average molecular weight) was 6,562, and the ratio of Mw/Mn was 4.16. The measured values of the initiator (b2) were such that the hydroxyl values was 170 (mgKOH/g), the acid value was 0.93 (mgKOH/g), Mn (the number average molecular weight) was 940, Mw (the mass average molecular weight) was 1,1753, and the ratio of Mw/Mn was 12.50.

### PREPARATION EXAMPLE 2: PREPARATION OF SLURRY CATALYST CONTAINING POLYMERIZATION CATALYST (a)

By using a zinc hexacyanocobaltate complex (a DMC catalyst) having tert-butyl alcohol coordinated thereto, as the polymerization catalyst (a), a slurry mixture of the DMC catalyst and a polyol P (a DMC-TBA catalyst) was prepared by the following process. The concentration (the active ingredient concentration) of the DMC catalyst (the solid catalyst component) contained in the slurry is 5.33 mass%.

### PRODUCTION OF DMC/TBA CATALYST

Into a 500 mL flask, an aqueous solution made of 10.2 g of zinc chloride and 10 g of water was introduced. An aqueous solution made of 4.2 g of potassium hexacyanocobaltate (K₃Co(CN)₆) and 75 g of water was dropwise added to the zinc chloride aqueous solution in the flask with stirring at 300 rpm (number of revolutions/min) over 30 minutes. Meantime, the solution mixture in the flask was maintained at 40°C. After completion of the dropwise addition of the potassium hexacyanocobaltate aqueous solution, the mixture in the flask was further stirred for 30 minutes, and then, a mixture made of 80 g of tert-butyl alcohol (hereinafter referred to as TBA), 80 g of water and 0.6 g of the following polyol P was added thereto, followed by stirring at 40°C for 30 minutes and further at 60°C for 60 minutes.

The polyol P is a polyoxypropylene diol which is obtained by addition polymerizing propylene oxide to propylene glycol by using a KOH catalyst and is purified by dealkalization, and which has a hydroxyl equivalent of 501.

The mixture thus obtained was filtrated under pressure (0.25 MPa) by using a circular filter plate having a diameter of 125 mm and a quantitative filter paper for fine particles (No. 5C manufactured by ADVANTEC) to separate a solid (a cake) containing a double metal cyanide complex.

Then, the obtained cake containing a double metal cyanide complex was transferred into a flask, and a mixture made of 36 g of TBA and 84 g of water was added thereto, followed by stirring for 30 minutes. Then, filtration under pressure was carried out under the same condition as above to obtain a cake. The obtained cake was transferred into a flask, and a mixture made of 108 g of TBA and 12 g of water was further added thereto, followed by stirring for 30 minutes to obtain a liquid (slurry) wherein the double metal cyanide complex catalyst (the DMC catalyst) was dispersed in the TBA/water solvent mixture. To the slurry, 120 g of the above polyol P was added, followed by mixing, and then, under reduced pressure, a volatile component was distilled at 80°C for 3 hours, further at 115°C for 3 hours, to obtain a slurry DMC catalyst (a DMC/TBA catalyst).

### PREPARATION EXAMPLE 3: PREPARATION OF FIRST POLYOL (A1-1)

A polyol was produced with a formulation as shown in Table 1, by using the above initiator (b1) as the initiator (b) and the slurry catalyst containing a DMC catalyst obtained in Preparation Example 2 as the polymerization catalyst (a).

That is, a 500 ml stainless steel pressure proof reactor with a stirrer was used as a reactor, and into the reactor, 248.2 g of the initiator (b1) and 682 mg of the slurry catalyst prepared in Preparation Example 2 (36 mg as the solid catalyst component) were introduced. After flushing inside of the reactor with nitrogen, the temperature was raised to 120°C, and vacuum-dehydration was carried out for 2 hours. After that, a liquid mixture of 24.1 g of propylene oxide (PO) and 12.2 g of ethylene oxide (EO) was supplied into the reactor over 40 minutes, followed by continued stirring for 2 hours 30 minutes, and stop of pressure dropping was confirmed. Meantime, the inner temperature of the reactor was kept at 120°C and the stirring rate at 500 rpm to let the reaction proceed.

Thus, the first polyol (A1-1) was obtained. The appearance of the obtained polyol was a transparent liquid at normal temperature. The characteristic values (Mw, Mn, Mw/Mn, the hydroxyl value and the biomass degree) of the polyol (A1-1) are shown in Table 1.

The biomass degree of the first polyol (A1) is one which may be used as an index of the content of a nonpetroleum type component in the polyol, and in the following Examples, it is calculated as a proportion (unit: %) of the mass of the initiator (b) based on the total mass of the raw materials (the initiator (b) and a monomer) which constitute the first polyol (A1). The larger the value, the larger the content of the component derived from a natural fat/oil.

### PREPARATION EXAMPLE 4: PREPARATION OF FIRST POLYOL (A1-2)

A first polyol (A1) was produced with a formulation as shown in Table 1, by using the above initiator (b1) as the polymerization catalyst (b) and the slurry catalyst containing a DMC catalyst obtained in Preparation Example 2 as the polymerization catalyst (a). This Example greatly differs from Preparation Example 3 in that as an alkylene oxide, only propylene oxide was used without using ethylene oxide.

Into the same reactor as in Preparation Example 3, 237.4 g of the initiator (b1) and 660 mg of the same slurry catalyst as in Preparation Example 3 (35 mg as a solid catalyst component) were introduced. After inside of the reactor was flushed with nitrogen, the temperature was raised to 120°C, and vacuum-dehydration was carried out for 2 hours. After that, 38.1 g of propylene oxide was supplied into the reactor, followed by continued stirring for 2.5 hours, and stop of pressure dropping was confirmed. Meantime, the inner temperature of the reactor was maintained at 120°C and the stirring rate at 500 rpm to let the reaction proceed.

Thus, the first polyol (A1-2) was obtained. The appearance of the obtained polyol was a transparent liquid at normal temperature. The characteristic values (Mw, Mn, Mw/Mn, the hydroxyl value and the biomass degree) of the polyol (A1-2) are shown in Table 1.

### PREPARATION EXAMPLE 5: PREPARATION OF FIRST POLYOL (A1-3)

A first polyol (A1-3) was produced with a formulation as shown in Table 1 by carrying out the reaction under the same conditions as in Preparation Example 3, by using the above initiator (b1) as the polymerization catalyst (b) and the slurry catalyst containing a DMC catalyst obtained in Preparation Example 2 as the polymerization catalyst (a).

Into the same reactor as in Preparation Example 3, 242.2 g of the initiator (b1) and 560 mg of the slurry catalyst prepared in Preparation Example 2 (30 mg as the solid catalyst component) were introduced. After flushing inside of the reactor with nitrogen, the temperature was raised to 120°C, and vacuum-dehydration was carried out for 2 hours. After that, a liquid mixture of 31.4 g of propylene oxide (PO) and 5.9 g of ethylene oxide (EO) was supplied into the reactor over 40 minutes, followed by continued stirring for 2 hours 30 minutes, and stop of pressure dropping was confirmed. Meantime, the inner temperature of the reactor was kept at 120°C and the stirring rate at 500 rpm to let the reaction proceed.

The appearance of the obtained polyol was a transparent liquid. The characteristic values (Mw, Mn, Mw/Mn, the hydroxyl value and the biomass degree) of the first polyol (A1-3) are shown in Table 1.

### PREPARATION EXAMPLE 6: PREPARATION OF FIRST POLYOL (A1-4)

A first polyol (A1-4) was produced with a formulation as shown in Table 1 by carrying out the reaction under the same conditions as in Preparation Example 3, by using the above initiator (b1) as the polymerization catalyst (b) and the slurry catalyst containing a DMC catalyst obtained in Preparation Example 2 as the polymerization catalyst (a).

Into the same reactor as in Preparation Example 3, 252.2 g of the initiator (b1) and 672 mg of the slurry catalyst prepared in Preparation Example 2 (36 mg as the solid catalyst component) were introduced. After flushing inside of the reactor with nitrogen, the temperature was raised to 120°C, and vacuum-dehydration was carried out for 2 hours. After that, a liquid mixture of 22.8 g of propylene oxide (PO) and 4.3 g of ethylene oxide (EO) was supplied into the reactor over 40 minutes, followed by continued stirring for 2 hours 30 minutes, and stop of pressure dropping was confirmed. Meantime, the inner temperature of the reactor was kept at 120°C and the stirring rate at 500 rpm to let the reaction proceed.

The appearance of the obtained polyol was a transparent liquid. The characteristic values (Mw, Mn, Mw/Mn, the hydroxyl value and the biomass degree) of the first polyol (A1-4) are shown in Table 1.

### PREPARATION EXAMPLE 7: PREPARATION OF FIRST POLYOL (A1-5)

A first polyol (A1-5) was produced with a formulation as shown in Table 1 by carrying out the reaction under the same conditions as in Preparation Example 3, by using the above initiator (b1) as the polymerization catalyst (b) and the slurry catalyst containing a DMC catalyst obtained in Preparation Example 2 as the polymerization catalyst (a).

Into the same reactor as in Preparation Example 3, 251.6 g of the initiator (b1) and 672 mg of the slurry catalyst prepared in Preparation Example 2 (36 mg as the solid catalyst component) were introduced. After flushing inside of the reactor with nitrogen, the temperature was raised to 120°C, and vacuum-dehydration was carried out for 2 hours. After that, a liquid mixture of 25.6 g of propylene oxide (PO) and 2.2 g of ethylene oxide (EO) was supplied into the reactor over 40 minutes, followed by continued stirring for 2 hours 30 minutes, and stop of pressure dropping was confirmed. Meantime, the inner temperature of the reactor was kept at 120°C and the stirring rate at 500 rpm to let the reaction proceed.

The appearance of the obtained polyol was a transparent liquid. The characteristic values (Mw, Mn, Mw/Mn, the hydroxyl value and the biomass degree) of the first polyol (A1-5) are shown in Table 1.

### COMPARATIVE PREPARATION EXAMPLE 1: PREPARATION OF COMPARATIVE POLYOL 1

A polyoxyalkylene polyol was produced with a formulation as shown in Table 1, by using the initiator (b2) as the polymerization initiator (b2) and KOH as a polymerization catalyst.

In the same reactor as in Example 1, 198.2 g of the initiator (b2) and 2.0 g of KOH (concentration: 95 mass% (containing water as an impurity)) as the polymerization catalyst, were introduced, and the temperature was raised to 120°C, followed by vacuum-dehydration for 2 hours for conversion to an alcoholate. After that, 88.4 g of propylene oxide was supplied into the reactor over 0.8 hour, and the reaction was further carried out at 120°C for 2 hours, whereupon stop of pressure dropping was confirmed. 105.6 g of ethylene oxide was supplied into the reactor over 0.45 hour, and the reaction was further carried out at 120°C for 1 hour, whereupon stop of pressure dropping was confirmed. After the completion of the reaction, for a purpose of removing the catalyst, the above KYOWAAD 600S (tradename, a synthetic magnesium oxide base adsorbent) was added in an amount of 5 mass% of the produced amount, and the moisture was vacuum-distilled at 120°C over 2 hours, whereby the catalyst was adsorbed and removed.

The characteristic values of the polyoxyalkylene polyol (the comparative polyol 1) thus obtained are shown in Table 1.

### COMPARATIVE PREPARATION EXAMPLE 2: PREPARATION OF COMPARATIVE POLYOL 2

A polyoxyalkylene polyol was produced with a formulation and reaction conditions as shown in Table 1, by using the initiator (b1) as the polymerization initiator and KOH as a polymerization catalyst.

In the same reactor as in Preparation Example 3, 215.8 g of the initiator (b1) and 6.25 g of KOH (concentration: 95 mass%) as the polymerization catalyst, were introduced, and the temperature was raised to 120°C, followed by vacuum-dehydration for 2 hours for conversion to an alcoholate. After that, a mixture of 20.9 g of propylene oxide and 10.6 g of ethylene oxide was supplied into the reactor over 3 hours, and the reaction was further carried out at 120°C for 7 hours, whereupon stop of pressure dropping was confirmed. After the completion of the reaction, for a purpose of removing the catalyst, the above KYOWAAD 600S (tradename, a synthetic magnesium oxide base adsorbent) was added in an amount of 5 mass% of the produced amount, and the moisture was vacuum-distilled at 120°C over 2 hours, whereby the catalyst was adsorbed and removed.

The characteristic values of the polyoxyalkylene polyol (the comparative polyol 2) thus obtained are shown in Table 1.

**TABLE 1**

| | | Polyol (A1-1) | Polyol (A1-2) | Polyol (A1-3) | Polyol (A1-4) | Polyol (A1-5) | Comparative polyol 1 | Comparative polyol 2 |
|---|---|---|---|---|---|---|---|---|
| Raw materials | Initiator (b1) (g) | 248.2 | 237.4 | 242.2 | 252.2 | 251.6 | - | 215.8 |
| | Initiator (b2) (g) | - | - | - | - | - | 198.2 | - |
| | Slurry catalyst (DMC catalyst) (5.33% active ingredient) (mg) | 682 (36) | 660(35) | 560(30) | 672 (36) | 672(36) | - | - |
| | Catalyst 95%KOH (g) | - | - | - | - | - | 2 | 6.25 |
| | PO (g) | 24.1 | 38.1 | 31.4 | 22.8 | 25.6 | 88.4 | 20.9 |
| | EO (g) | 12.2 | - | 5.9 | 4.3 | 2.2 | 105.6 | 10.6 |
| Characteristic values | Mw | 8,516 | 8,402 | 7,851 | 8,725 | 9,468 | 5,802 | 6,593 |
| | Mn | 2,338 | 2,368 | 2,386 | 2,252 | 2,465 | 1,371 | 1,117 |
| | Mw/Mn | 3.64 | 3.55 | 3.29 | 3.87 | 3.84 | 4.23 | 5.90 |
| | Hydroxyl value (mgKOH/g) | 43.8 | 41.0 | 45.3 | 46.4 | 46.4 | 120.4 | 85.4 |
| | Biomass degree (%) | 87 | 86 | 87 | 90 | 90 | 50 | 85 |

### EXAMPLES AND COMPARATIVE EXAMPLES

Flexible polyurethane foams are produced with formulations as shown in Tables 2, 4 and 6, and their foam physical properties were measured. The measurement results are shown in Tables 3, 5 and 7. In Tables 2, 4 and 6, the unit of the amounts of the respective components other than polyisocyanate is parts by mass.

The raw materials shown in the following Tables 2, 4 and 6 are as follows.

Polyol (A2-1): a polyoxypropyleneoxyethylene polyol having 4 functional groups on average and a hydroxyl value of 28 mgKOH/g and containing 13 mass% of a polyoxyethylene group at its terminals

Polyol (A2-2): a polyoxypropyleneoxyethylene polyol having 3 functional groups on average and a hydroxyl value of 28 mgKOH/g and containing 17 mass% of a polyoxyethylene group at its terminals

Polyol (A2-3): a polymer-dispersed polyol obtained by polymerizing acrylonitrile in a polyoxypropyleneoxyethylene polyol having 3 functional groups on average and a hydroxyl value of 34 mgKOH/g and containing 14.5 mass% of a polyoxyethylene group at its terminals. The polymer-dispersed polyol has a hydroxyl value of 28 mgKOH/g, and a polymer particle content of 20 mass%.

Polyol (A2-4): a polymer-dispersed polyol obtained by copolymerizing acrylonitrile with styrene in a polyoxypropyleneoxyethylene polyol having 3 functional groups on average and a hydroxyl value of 34 mgKOH/g and containing 14.5 mass% of a polyoxyethylene group at its terminals. The polymer-dispersed polyol has a hydroxyl value of 23.5 mgKOH/g and a polymer particle content of 35 mass%.
Crosslinking agent 1: diethanolamine
Crosslinking agent 2: a polyoxypropyleneoxyethylene polyol having 6 functional groups on average and a hydroxyl value of 445 mgKOH/g and containing 28 mass% of a polyoxyethylene group at its terminals
Cell opener: a polyoxypropyleneoxyethylene polyol obtained by random copolymerization of propylene oxide with ethylene oxide in a mass ratio of 20/80, having a hydroxyl value of 48 mgKOH/g
Catalyst (C-1): a 33% dipropylene glycol (DPG) solution of triethylenediamine (tradename: TEDA L33, manufactured by TOSOH CORPORATION)
Catalyst (C-2): a 70% DPG solution of bis-(2-dimethylaminoethyl) ether (tradename: TOYOCAT ET, manufactured by TOSOH CORPORATION)
Catalyst (C-3): tin 2-ethylhexanoate (tradename: DABCO T-9, manufactured by Air Products and Chemicals, Inc.)
Foam stabilizer 1: a silicone foam stabilizer (tradename: SF-2962, manufactured by TORAY Dow Corning Corporation)
Foam stabilizer 2: a silicone foam stabilizer (tradename: L-3601, manufactured by TORAY Dow Corning Corporation)
Foam stabilizer 3: a silicone foam stabilizer (tradename: SZ-1325, manufactured by TORAY Dow Corning Corporation)
Foam stabilizer 4: a silicone foam stabilizer (tradename: L-5740S, manufactured by TORAY Dow Corning Corporation)
Blowing agent (D): water
Polyisocyanate compound (B-1): a mixture of TDI-80 and crude MDI in a mass ratio of 80/20 (tradename: CORONATE 1021, manufactured by NIPPON POLYURETHANE INDUSTRY CO., LTD.)
Polyisocyanate compound (B-2): TDI-80 (a mixture of 2,4-TDI/2,6-TDI = 80/20 mass%) (tradename: CORONATE T-80, manufactured by NIPPON POLYURETHANE INDUSTRY CO., LTD.)

Further, the amount of the polyisocyanate compound used is shown by an isocyanate index (100 times of an equivalent ratio)

### METHODS FOR MEASUREMENT OF FOAM PHYSICAL PROPERTIES

With respect to the foam physical properties, the entire density, the core portion density, the 25% hardness (ILD hardness), the air flow, the rebound resilience, the rebound resilience at the core portion, the tear strength, the tensile strength, the elongation, the dry set, the wet set and the hysteresis loss were evaluated.

Further, the density at the core portion and the rebound resilience at the core portion were measured by using a sample cutout in a size of 100 mm x 100 mm x 50 mm in height from the center portion of the foam excluding the skin portion.

The entire density, the density at the core portion, the 25% hardness, the rebound resilience, the tear strength, the tensile strength, the elongation, the dry set, the wet set and the hysteresis loss were measured in accordance with JIS K6400 (1997 edition).

### VIBRATION CHARACTERISTICS

With respect to the vibration characteristics, the resonance frequency (unit: Hz), the transmissibility at resonance frequency (measurement of absolute displacement) and the transmissibility of 6 Hz were evaluated. The measurements were carried out in accordance with JASO B407-87. As conditions for measuring the vibration characteristics, Tekken type (load: 490 N) was used as a pressing platen, and the vibrational total amplitude was adjusted to be 5 mm.

### EXAMPLES 1 to 4 and COMPARATIVE EXAMPLES 1 to 3

Flexible polyurethane foams were produced by mold-foaming with the formulations as shown in Table 2, by using the first polyols (A1-1) and (A1-2) obtained in Preparation Examples 3 and 4, respectively, and comparative polyols obtained in Comparative Preparation Examples 1 and 2.

Further, in Comparative Example 3, a flexible polyurethane foam was produced by mold-foaming with the formulation as shown in Table 2, by using the initiator (b1) instead of the first polyol (A1).

The biomass degree in each composition used for foaming is shown in Table 2. The biomass degree of the composition is one which serves as an index of the content of a nonpetroleum type component in the composition, and in the following Examples and Comparative Examples, it is calculated as the mass proportion (unit: %) of the initiator (b1) contained in the raw materials, based on the total mass of the materials constituting the composition. The mass of the initiator (b1) contained in each of the first polyols (A1-1) and (A1-2) and the comparative polyols 1 and 2 was calculated by "amount of the polyol used (mass) x biomass degree of the polyol (%)."

In Examples 1 to 3 and Comparative Examples 1 to 3, each flexible polyurethane foam was produced by the following process.

First, a mixture of all raw materials (a polyol-containing mixture) except for the polyisocyanate compound, was adjusted to have a liquid temperature of 30±1°C. Separately, the polyisocyanate compound was adjusted to have a liquid temperature of 25±1°C.

Then, to the polyol-containing mixture, the polyisocyanate compound was added until a prescribed index, followed by stirring and mixing by a high-speed mixer (3,000 rpm) for 5 seconds, and the mixture was immediately injected into a mold heated at 60°C and sealed. As the mold, an aluminum mold having an inside dimension of 400 mm in length x 400 mm in width x 100 mm or 70 mm in height, was used.

Then, after curing at 60°C for 7 minutes, a flexible polyurethane foam was taken out from the mold. After crushing, the foam was left in a room (temperature: 23°C and relative humidity: 50%) for 24 hours, followed by measurements of various foam physical properties.

Crushing is a step in which after the flexible polyurethane foam is taken out from the mold, the foam is continuously compressed to 75% of the foam thickness.

In Example 4, a flexible polyurethane foam was produced by the following process.

First, in the same manner as in Example 1, a polyol-containing mixture was prepared.

By using a two-component system high pressure-foaming machine (manufactured by Canon Inc., head: FPL18Φ-L type), the polyol-containing mixture was filled in one tank, and the liquid temperature was adjusted to 25±2°C. In the other tank, the polyisocyanate compound was filled and adjusted to 25±2°C. Then, a raw material prepared by mixing them was injected into a mold heated at 60°C and sealed. As the mold, an aluminum mold having an inside dimension of 400 mm in length x 400 mm in width x 100 mm or 70 mm in height, was used.

Then, after curing at 60°C for 7 minutes, a flexible polyurethane foam was taken out from the mold. After crushing, the foam was left in a room (temperature: 23°C and relative humidity: 50%) for 24 hours, followed by measurements of various foam physical properties.

**TABLE 2**

| | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|
| Formulation | Polyol (A1-1) | 25.6 | 25.8 | 26 | | | | |
| | Polyol (A1-2) | | | | 26 | | | |
| | Comparative polyol 1 | | | | | 60 | | |
| | Comparative polyol 2 | | | | | | 25.6 | |
| | Initiator (b1) | | | | | | | 30 |
| | Polyol (A2-1) | 60.4 | 60.2 | 60 | 49 | | 60.4 | |
| | Polyol (A2-2) | | | | | 20 | | 30 |
| | Polyol (A2-3) | | | | | 20 | | 40 |
| | Polyol (A2-4) | 14 | 14 | 14 | 25 | | 14 | |
| | Cell opener | 1 | 1 | 1 | 1 | | 1 | |
| | Crosslinking agent 1 | 0.5 | 0.5 | 0.5 | 0.5 | | 0.5 | |
| | Crosslinking agent 2 | 1.5 | 1.5 | 1.5 | 1.5 | | 1.5 | |
| | Catalyst (C-1) | 0.6 | 0.6 | 0.6 | 0.6 | 0.6 | 0.6 | 0.6 |
| | Catalyst (C-2) | 0.07 | 0.07 | 0.07 | 0.07 | 0.10 | 0.07 | 0.07 |
| | Foam stabilizer 1 | 0.5 | 0.5 | 0.5 | | | 0.5 | |
| | Foam stabilizer 2 | | | | 0.4 | 0.4 | | |
| | Foam stabilizer 3 | | | | | | | 1 |
| | Blowing agent (D) | 3.2 | 3.2 | 3.2 | 3.2 | 2.3 | 3.2 | 3 |
| | Polyisocyanate (B-1) (shown by index) | 100 | 103 | 105 | 100 | 100 | 103 | 100 |
| Biomass degree (%) of composition | | 15 | 15 | 15 | 15 | 20 | 15 | 20 |
| Height of mold (mm) | | 100 | 100 | 100 | 100 | 70 | 100 | 100 |

**TABLE 3**

| | | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|---|
| Mass (g) of foam during measurement of physical properties | | | 967.9 | 965.9 | 970.4 | 974.1 | 654.2 | 951.1 | 952.3 |
| Entire density (kg/m³) | | | 63.5 | 63.5 | 63.7 | 63.5 | 61.4 | 60.6 | 62.4 |
| Density at core portion (kg/m³) | | | 57.4 | 56.5 | 57.0 | 57.6 | 56.2 | 55.3 | 58.3 |
| ILD hardness (initial load: 0.5 kg) | | Initial thickness (mm) | 97.7 | 97.7 | 97.8 | 96.8 | 67.4 | 98.7 | 99.1 |
| | | 25% (N/314 cm²) | 206 | 219 | 229 | 245 | 262 | 311 | 304 |
| Air flow | | Core (L/min) | 26 | 27 | 27 | 8 | - | - | 14 |
| Rebound resilience (entire) (%) | | | 60 | 60 | 59 | 55 | 23 | 24 | 49 |
| Rebound resilience at core portion (%) | | | 62 | 62 | 63 | 53 | 21 | 27 | 48 |
| Tear strength (N/cm) | | | 5.4 | 5.4 | 4.7 | 5.2 | 5.1 | 4.9 | 7.0 |
| Tensile strength (KPa) | | | 121 | 115 | 108 | 129 | 133 | 130 | 73 |
| Elongation (%) | | | 100 | 95 | 87 | 84 | 77 | 74 | 79 |
| Dry set (%) | | | 2.7 | 3.3 | 3.2 | 3.4 | 14.6 | 14.4 | 6.6 |
| Wet set (%) | | | 9.3 | 9.4 | 9.1 | 9.8 | 7.2 | 8.1 | 20.0 |
| Rate of hysteresis loss (%) | | | 18.2 | 18.5 | 19.1 | 20.4 | 52.0 | 54.8 | 29.3 |
| Vibration characteristics | Resonance frequency (Hz) | | 3.38 | 3.33 | 3.30 | 3.35 | 6.50 | 6.74 | 4.13 |
| | Transmissibility at resonance frequency | | 2.43 | 2.38 | 2.83 | 2.05 | 3.13 | 3.01 | 2.65 |
| | Transmissibility of 6 Hz | | 0.60 | 0.55 | 0.55 | 0.70 | 2.33 | 2.39 | 1.14 |

According to the results in Table 3, in Examples 1 to 4 in which the first polyols (A1-1) and (A1-2) were used, good flexible polyurethane foams were obtained, and such flexible polyurethane foams have a high rebound resilience and good cushioning characteristic. Especially, flexible polyurethane foams obtained in Examples 1 to 3 in which the first polyol (A1-1) was used, have an excellent cushioning characteristic.

Further, also with respect to the vibration characteristics which serve as an index for evaluating a riding comfort of automotive seats, good results were obtained such that as compared with Comparative Examples 1 to 3 in which the resonance frequency was at least 4 Hz, in Examples 1 to 4, the resonance frequency was at most 4 Hz. That is, when the value of the resonance frequency is at most 4 Hz, the vibration in a human-sensitive frequency range is efficiently attenuated, whereby a good riding comfort can be obtained. The resonance frequency is preferably small. Further, the smaller the transmissibility at resonance frequency and transmissibility of 6 Hz, the better the riding comfort.

On the other hand, in Comparative Examples 1 and 2 wherein as the polyalkylene polyol (A), a comparative polyol was used which was prepared by using the same polyol derived from soybean oil as the first polyols (A1-1) and (A1-2), as the polymerization initiator (a), but using KOH being an anionic polymerization catalyst, as a polymerization catalyst, the rebound resilience was low, a hysteresis loss was large, and cushioning characteristic was poor.

Further, in Comparative Example 3 in which a polyol (the initiator (b1)) derived from soybean oil having no alkylene oxide added thereto was used instead of the first polyol (A1-1) and (A1-2), and the wet set and dry set were significantly deteriorated, and as compared with Examples, the rebound resilience was small, and cushioning characteristic was poor. Furthermore, the tear strength was significantly deteriorated.

### EXAMPLE 5 and COMPARATIVE EXAMPLES 4 and 5

In Example 5, a flexible polyurethane foam was produced by slab-foaming with the formulation as shown in Table 4, by using the first polyol (A1-1) obtained in Preparation Example 3.

Comparative Examples 4 and 5 are Examples in which the first polyol (A1-1) in Example 5 was changed to the initiator (b1). The biomass degree of the composition used for foaming is shown in Table 4.

First, a mixture of all raw materials (a polyol-containing mixture) except for the catalyst (C-3) being a catalyst made of an organic tin compound, and a polyisocyanate compound, was adjusted to have a liquid temperature of 23±1°C. Separately, the polyisocyanate compound was adjusted to have a liquid temperature of 22±1°C.

Then, the catalyst (C-3) was added to the polyol-containing mixture, followed by stirring and mixing with a high-speed mixer (3,000 rpm) for 5 seconds, and then, the polyisocyanate compound was added until a prescribed index, followed by stirring and mixing in the same manner for 5 seconds. Immediately after that, the mixture was injected into a mold having its upper portion opened at room temperature. As the mold, a wooden box having an inside dimension of 250 mm in each of length, width and height and having a plastic sheet laid inside thereof, was used.

2 Minutes after completion of the injection, the flexible polyurethane foam was taken out from the mold and left in a room (temperature: 23°C, relative humidity: 50%) for 24 hours, followed by measurements of various foam physical properties.

**TABLE 4**

| | | Ex. 5 | Comp. Ex. 4 | Comp. Ex. 5 |
|---|---|---|---|---|
| Formulation | Polyol (A1-1) | 50 | | |
| | Initiator (b1) | | 30 | 50 |
| | Polyol (A2-5) | 50 | 70 | 50 |
| | Catalyst (C-1) | 0.5 | 0.5 | 0.5 |
| | Catalyst (C-3) | 0.5 | 0.5 | 0.5 |
| | Foam stabilizer 4 | 1 | 1 | 1 |
| | Blowing agent (D) | 3.2 | 3.2 | 3.2 |
| | Polyisocyanate (B-2) (shown by index) | 100 | 100 | 100 |
| Biomass degree (%) of composition | | 30 | 20 | 34 |

**TABLE 5**

| | | Ex. 5 | Comp. Ex. 4 | Comp. Ex. 5 |
|---|---|---|---|---|
| Moldability | | Good | Good | Cracks formed |
| Density at core portion (kg/m³) | | 30.8 | 31.3 | - |
| ILD hardness (initial load: 0.5 kg) | Initial thickness (mm) | 50.4 | 50.8 | - |
| | 25% (N/314 cm²) | 167 | 279 | - |
| Air flow at core portion (L/min) | | 27 | 10 | - |
| Rebound resilience at core portion (%) | | 17 | 29 | - |
| Rate of hysteresis loss (%) | | 45.7 | 41.0 | - |

According to the results in Table 5, in Example 5 in which the first polyol (A1-1) was used, a good flexible polyurethane foam was obtained. On the other hand, between Comparative Examples 4 and 5 wherein the initiator (b1) was used instead of the first polyol, in Comparative Example 5 in which the initiator (b1) was blended in the same number as in the first polyol in Example 5, cracks were formed inside of the foam, and the moldability was poor. Further, since cracks were formed in the foam in Comparative Example 5, the measurements of foam physical properties were not carried out. Further, in Example 5, the rebound resilience is low, and the low resilience is excellent, as compared with Comparative Example 4.

### EXAMPLES 6 to 11

Flexible polyurethane foams were produced by mold-foaming with the formulations as shown in Table 6 by using the first polyols (A1-3) to (A1-5) obtained in Preparation Examples 5 to 7. The biomass degree in the composition used for foaming is shown in Table 6.

The production process for the flexible polyurethane foams was the same as in Example 1. As the mold, an aluminum mold having an inside dimension of 400 mm in length x 400 mm in width x 100 mm in height, was used. With respect to the obtained flexible polyurethane foams, various foam physical properties were measured in the same manner as in Example 1.

**TABLE 6**

| | | Ex. 6 | Ex. 7 | Ex. 8 | Ex. 9 | Ex. 10 | Ex. 11 |
|---|---|---|---|---|---|---|---|
| Formulation | Polyol (A1-3) | 25.8 | 35 | | | | |
| | Polyol (A1-4) | | | 25 | 33.5 | | |
| | Polyol (A1-5) | | | | | 25 | 33.5 |
| | Polyol (A2-1) | 60.2 | 43.3 | 61 | 44.8 | 61 | 44.8 |
| | Polyol (A2-4) | 14 | 21.7 | 14 | 21.7 | 14 | 21.7 |
| | Cell opener | 1 | 1 | 1 | 1 | 1 | 1 |
| | Crosslinking agent 1 | 0.5 | 0.5 | 0.5 | 0.5 | 0.5 | 0.5 |
| | Crosslinking agent 2 | 1.5 | 1.5 | 1.5 | 1.5 | 1.5 | 1.5 |
| | Catalyst (C-1) | 0.6 | 0.6 | 0.6 | 0.6 | 0.6 | 0.6 |
| | Catalyst (C-2) | 0.07 | 0.07 | 0.07 | 0.07 | 0.07 | 0.07 |
| | Foam stabilizer 1 | 0.5 | 0.5 | 0.5 | 0.5 | 0.5 | 0.5 |
| | Blowing agent (D) | 3.2 | 3.2 | 3.2 | 3.2 | 3.2 | 3.2 |
| | Polyisocyanate (B-1) (shown by index) | 103 | 100 | 103 | 100 | 103 | 100 |
| Biomass degree (%) of composition | | 15 | 20 | 15 | 20 | 15 | 20 |
| Height of mold (mm) | | 100 | 100 | 100 | 100 | 70 | 100 |

**TABLE 7**

| | | | Ex. 6 | Ex. 7 | Ex. 8 | Ex. 9 | Ex. 10 | Ex. 11 |
|---|---|---|---|---|---|---|---|---|
| Mass (g) of foam during measurement of physical properties | | | 953.8 | 958.5 | 952.7 | 955.5 | 954.5 | 955.1 |
| Entire density (kg/m³) | | | 62.2 | 62.4 | 62.4 | 62.3 | 62.3 | 62.3 |
| Density at core portion (kg/m³) | | | 54.9 | 53.8 | 55.6 | 52.8 | 54.7 | 53.6 |
| ILD hardness (initial load: 0.5 kg) | | Initial thickness (mm) | 97.9 | 97.1 | 97.8 | 97.9 | 97.7 | 98 |
| | | 25% (N/314 cm²) | 206 | 201 | 231 | 206 | 219 | 193 |
| Air flow | | Core (L/min) | 54 | 47 | 49 | 57 | 35 | 45 |
| Rebound resilience (entire) (%) | | | 60 | 55 | 60 | 55 | 61 | 55 |
| Rebound resilience at core portion (%) | | | 63 | 54 | 62 | 53 | 61 | 53 |
| Tear strength (N/cm) | | | 5.0 | 6.0 | 4.8 | 4.4 | 5.2 | 4.7 |
| Tensile strength (KPa) | | | 110.4 | 136.4 | 120.8 | 82.8 | 117.8 | 80.2 |
| Elongation (%) | | | 105 | 114 | 108 | 91 | 110 | 94 |
| Dry set (%) | | | 3.4 | 4.5 | 4.0 | 4.1 | 3.2 | 3.3 |
| Wet set (%) | | | 11.1 | 13.7 | 9.6 | 11.6 | 9.0 | 10.6 |
| Rate of hysteresis loss (%) | | | 19.3 | 22.6 | 19.1 | 23.4 | 19.1 | 23.4 |
| Vibration characteristics | Resonance frequency (Hz) | | 3.40 | 3.62 | 3.25 | 3.55 | 3.40 | 3.73 |
| | Transmissibility at resonance frequency | | 3.60 | 3.15 | 3.73 | 3.00 | 3.53 | 3.00 |
| | Transmissibility of 6 Hz | | 0.64 | 0.74 | 0.51 | 0.69 | 0.59 | 0.8 |

According to the results shown in Table 7, in Examples 6 to 11 in which the first polyols (A1-3) to (A1-5) were used, good flexible polyurethane foams were obtained. Such flexible polyurethane foams had a high rebound resilience and good cushioning characteristic, and their vibration characteristics were also good as the resonance frequency was at most 4 Hz.

### INDUSTRIAL APPLICABILITY

The present invention provides a process for producing a flexible polyurethane foam having a high rebound resilience and good cushioning characteristic by using a raw material derived from a natural fat/oil.

The entire disclosure of Japanese Patent Application No. 2006-263134 filed on September 27, 2006 including specification, claims and summary is incorporated herein by reference in its entirety.

## Claims

1. A process for producing a flexible polyurethane foam, which comprises a step of reacting a polyoxyalkylene polyol (A) containing a first polyoxyalkylene polyol (A1) obtained by ring-opening polymerization of an alkylene oxide (c) with an initiator (b) in the presence of a polymerization catalyst (a), with a polyisocyanate compound (B) in the presence of a catalyst (C) and a blowing agent (D), wherein the polymerization catalyst (a) is a catalyst which does not accelerate hydrolysis of a glyceride structure derived from a natural fat/oil; and the initiator (b) is a polyol derived from a natural fat/oil, which is obtained by providing a natural fat/oil with hydroxyl groups through a chemical reaction, and has a hydroxyl value of from 20 to 250 mgKOH/g and a ratio of the mass average molecular weight to the number average molecular weight calculated as polystyrene, (Mw/Mn), of at least 1.2.

2. The process for producing a flexible polyurethane foam according to Claim 1, wherein the polymerization catalyst (a) is at least one member selected from the group consisting of a coordination anionic polymerization catalyst and a cationic polymerization catalyst.

3. The process for producing a flexible polyurethane foam according to Claim 1 or 2, wherein the polyoxyalkylene polyol (A) further contains a second polyoxyalkylene polyol (A2) which is a polyoxyalkylene polyol other than the first polyoxyalkylene polyol (A1), and which has from 2 to 8 average functional groups and a hydroxyl value of from 20 to 160 mgKOH/g.

4. The process for producing a flexible polyurethane foam according to any one of Claims 1 to 3, wherein in the polyoxyalkylene polyol (A), the mass ratio of the first polyoxyalkylene polyol (A1) to the second polyoxyalkylene polyol (A2), (A1)/(A2), is from 10/90 to 90/10.

5. The process for producing a flexible polyurethane foam according to any one of Claims 1 to 4, wherein the alkylene oxide (c) includes propylene oxide.

6. The process for producing a flexible polyurethane foam according to any one of Claims 1 to 5, wherein the initiator (b) is a polyol derived from a natural fat/oil, which is obtained by a method (1) wherein air or oxygen is blown in a natural fat/oil to form hydroxyl groups and/or a method (2) wherein after a natural fat/oil is epoxidized, the epoxy rings are ring-opened to form hydroxyl groups.

7. A flexible polyurethane foam according to any one of Claims 1 to 6, wherein the initiator (b) is derived from soybean oil.

8. The process for producing a flexible polyurethane foam according to any one of Claims 1 to 7, wherein the polyisocyanate compound (B) contains at least one member selected from the group consisting of tolylene diisocyanate, diphenylmethane diisocyanate, polymethylene polyphenyl polyisocyanate and their modified products.

9. The process for producing a flexible polyurethane foam according to any one of Claims 1 to 8, wherein the catalyst (C) contains at least one member selected from the group consisting of an amine compound, a reactive amine compound and an organic tin compound.

10. The process for producing a flexible polyurethane foam according to any one of Claims 1 to 9, wherein water is used as the blowing agent (D).
